# EUROPEAN PATENT APPLICATION

(11) **EP 4 832 301 A1**
(43) Date of publication of application: **28.10.2026**
(21) Application number: 26150275.1
(22) Date of filing: 05.01.2026
(51) Int. Cl.: H02J 7/70, H01M 10/44, H01M 10/46, H01M 10/613, H01M 10/615

(54) **BATTERY CHARGER**

(30) Priority: 25.04.2025 KR 20250054426
(71) Applicant: SAMSUNG SDI CO., LTD., Yongin-si, Gyeonggi-do 17084 (KR)
(72) Inventor: JUNG, Dong Woo, 16678 Suwon-si (KR); LEE, Il Bok, 16678 Suwon-si (KR); KWAK, Hyo Jun, 16678 Suwon-si (KR); KIM, Hyung Joon, 16678 Suwon-si (KR)
(74) Representative: Marks & Clerk LLP

(57) **Abstract**

The present disclosure provides a battery charger including a tray supporting each of a plurality of battery cells so that the plurality of battery cells are vertically spaced apart from one another, a probe connected to each of the battery cells and charging the plurality of battery cells, and a hopper nozzle removing internal gas from the plurality of battery cells.

## Description

### FIELD

The present disclosure relates to a battery charger.

### BACKGROUND

In general, as demand for portable electronic products such as laptops, video cameras, and portable phones increases rapidly and commercialization of robots, electric vehicles, and the like begins in earnest, research on high-performance secondary batteries capable of repeated charging and discharging is being actively conducted. In particular, since lithium secondary batteries have high energy density and operating voltage and excellent preservation and lifetime characteristics, the lithium secondary batteries are widely used as energy sources for various electronic products.

The lithium secondary battery is manufactured by manufacturing an electrode assembly with a separator disposed between a positive electrode and a negative electrode and placing the manufactured electrode assembly into a cylindrical, pouch-shaped, or prismatic case according to the battery type.

Thereafter, an additional process, such as electrolyte injection, may be performed, and an activation process is initiated to activate electrical energy and verify stability. This process is performed by processes such as aging and charging/discharging. First, it is stored at a set temperature so that the electrolyte permeates the positive electrode and the negative electrode through aging. The battery is charged when the electrolyte is dispersed inside the battery and ions move smoothly between the positive electrode and the negative electrode.

The herein-described information disclosed in the background technology of the present disclosure is only for improving understanding of the background of the present disclosure, and accordingly, can include information that does not constitute the related art.

### SUMMARY

The present disclosure is directed to providing a battery charger, which may increase the workload by vertically arranging battery cells and arranging a large amount of battery cells in a limited space.

However, technical problems to be solved by the present disclosure are not limited to the herein-described problems, and other problems which are not mentioned, will be clearly understood by those skilled in the art from the description of the disclosure disclosed herein.

According to aspects of the present disclosure, there is provided a battery charger including: a tray configured to support each of a plurality of battery cells so that the plurality of battery cells are vertically spaced apart from one another (or each other), a probe connected to each of the battery cells and configured to charge the plurality of battery cells, and a hopper nozzle configured to remove internal gas from the plurality of battery cells.

The tray may include: a frame; and a socket detachable from the frame and inducing the battery cell to be disposed vertically.

The frame may include: an outer frame having a rectangular frame shape; an inner frame that divides the inside of the outer frame; and a guide that guides the socket.

The frame may further include a support frame connected to the outer frame and supporting the battery cell.

The guide may protrude from the outer frame and the inner frame to guide the socket.

The guide may be recessed in the outer frame and the inner frame to guide the socket.

The socket may include: a socket plate disposed inside the frame; a socket connector formed at an end portion of the socket plate and movable along the guide; and a plurality of socket receiving parts formed in a longitudinal direction of the socket plate and configured to partition and accommodate the battery cells.

The tray may further include a cooling part, formed in at least one of the frame and the socket, and cooling the battery cell.

The cooling part may include a water cooling part formed on the frame and cooling the battery cell using cooling water.

The cooling part may include an air cooling part formed on the frame and cooling the battery cell using cooling air.

The cooling part may include: a water cooling part formed on the frame and cooling the battery cell using cooling water; and an air cooling part formed on the frame and cooling the battery cell using cooling air.

The tray may further include a frame lifting part that moves the frame up and down.

The battery charger may further include a heating part configured to heat the battery cell.

The heating part may include: a heating frame; a heating frame lifting part that elevates and lowers the heating frame; a heating plate provided in the heating frame and heated when power is applied; and a heating sensor mounted on the heating plate and measuring a temperature.

According to aspects of the present disclosure, there is provided a battery charger including a tray in which battery cells are disposed vertically; a probe connected to at least one of the battery cells and configured to charge the at least one of the battery cells; and a heating part mounted on the tray and configured to heat the at least one of the battery cells.

The tray may include: a frame; and a socket detachable from the frame and inducing the at least one of the battery cells to be disposed vertically.

The frame may include: an outer frame having a rectangular frame shape; an inner frame that divides an inside of the outer frame; and a guide that guides the socket.

The frame may further include a frame lifting part that is connected to the outer frame and adjusts a height of the outer frame.

The tray may further include a cooling part, formed in the frame and the socket, and cooling the at least one of the battery cells.

The heating part may include: a heating frame mounted on the frame; a heating plate provided in the heating frame and heated when power is applied; and a heating sensor mounted on the heating plate and measuring a temperature.

According to aspects of the present disclosure, there is provided a method of manufacturing a battery charger including: providing a tray configured to support each of a plurality of battery cells so that the plurality of battery cells are vertically spaced apart from one another, providing a probe connected to each of the battery cells and configured to charge the plurality of battery cells, and providing a hopper nozzle configured to remove internal gas from the plurality of battery cells.

At least some of the above and other features of the invention are set out in the claims.

### BRIEF DESCRIPTION OF THE DRAWINGS

The following drawings attached to this specification illustrate preferred embodiments of the present disclosure and, together with the detailed description of the disclosure to be described herein, serve to further understand the technical idea of the present disclosure, and therefore the present disclosure should not be construed as being limited to matters described in such drawings, in which:
FIG. 1 is a view schematically showing a battery charger according to embodiments of the present disclosure;
FIG. 2 is a view schematically showing a tray according to embodiments of the present disclosure;
FIG. 3 is a view schematically showing a frame according to embodiments of the present disclosure;
FIG. 4 is a view schematically showing embodiments of a guide formed in the frame of FIG. 3;
FIG. 5 is a view schematically showing embodiments of the guide formed in the frame of FIG. 3;
FIG. 6 is a view schematically showing a socket according to embodiments of the present disclosure;
FIG. 7 is a view schematically showing embodiments of a cooling part cooling the frame according to embodiments of the present disclosure;
FIG. 8 is a view schematically showing embodiments of the cooling part cooling the frame according to embodiments of the present disclosure;
FIG. 9 is a view schematically showing embodiments of the cooling part cooling the frame according to embodiments of the present disclosure;
FIG. 10 is a view schematically showing a frame lifting part according to embodiments of the present disclosure;
FIG. 11 is a view schematically showing an arrangement state of a heating part according to embodiments of the present disclosure;
FIG. 12 is a view schematically showing the heating part according to embodiments of the present disclosure;
FIG. 13 is a view schematically showing a battery charger according to embodiments of the present disclosure;
FIG. 14 is a plan perspective view schematically showing a tray according to embodiments of the present disclosure, including an enlarged portion;
FIG. 15 is a bottom perspective view schematically showing the tray according to embodiments of the present disclosure;
FIG. 16 is a view schematically showing a heating part according to embodiments of the present disclosure;
FIG. 17 is a view schematically showing a battery cell according to embodiments of the present disclosure; and
FIG. 18 is a view schematically showing a battery cell according to embodiments of the present disclosure.

### DETAILED DESCRIPTION

Hereinafter, example embodiments of the present disclosure will be described in detail with reference to the attached drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her disclosure in the best way. Accordingly, since the embodiments disclosed in the present specification and configurations shown in the drawings are only some of the most preferable embodiments of the present disclosure and do not represent the entire technical scope of the present disclosure, it should be understood that there are various equivalents and modifications which may replace them provided that they are within the scope of the invention as defined by the claims.

Further, when used in the present specification, "comprise or include" and/or "comprising or including" specify the presence of mentioned shapes, numbers, steps, operations, members, elements and/or groups thereof, and do not exclude the presence or addition of one or more other shapes, numbers, steps, operations, members, elements and/or groups thereof.

Further, in order to help understanding of the present disclosure, the accompanying drawings are not drawn to actual scale and the sizes of some components may be exaggerated. In addition, the same reference numerals may be given to the same components in different embodiments.

The mention that two objects to be compared are 'the same' means that that the two objects are 'substantially the same.' Accordingly, 'substantially the same' may include a deviation considered as a low level in the art, for example, a deviation within 5%. Further, uniformity of a parameter in a certain region may mean uniformity from an average point of view.

Although first, second, and the like are used to describe various components, it goes without saying that these components are not limited by these terms. These terms are only used to distinguish one component from another component, and unless otherwise stated, it goes without saying that the first component may be the second component.

Throughout the specification, unless otherwise stated, each component may be singular or plural.

The placement of an arbitrary component on the "upper portion (or lower portion)" of a component or "above (or below)" of a component may mean not only that the arbitrary component is disposed in contact with an upper surface (or a lower surface) of the component, but also that another component may be interposed between the component and the arbitrary component disposed above (or below) the component.

Further, when it is disclosed that a certain component is "on," "connected to," or "coupled to" another component, it should be understood that the components may be directly connected or coupled to one another, but another component may be "interposed" between the components, or the components may be "connected," "coupled," or "linked" through another component.

As used in the present specification, the term "and/or" includes any one or more and all combinations of the related listed items. Further, when embodiments of the present disclosure are described, the use of "may" relates to "one or more embodiments of the present disclosure." The term such as "one or more" before a list of elements modifies an entire list of the elements and does not modify individual elements in the list.

Throughout the specification, "A and/or B" means to A, B, or A and B unless otherwise stated, and "C to D" means greater than or equal to C and less than or equal to D unless otherwise specified.

When phrases such as "at least one of A, B, and C," "at least one of A, B, or C," "at least one selected from group A, B, and C," or "at least one selected from A, B, and C" are used to specify a list of elements A, B, and C, the phrases may refer to any one of all suitable combinations.

The term "use" may be considered to be synonymous with the term "utilize." As used in the present specification, the terms "substantially," "about," and other similar terms are used as terms of approximation rather than terms of degrees, and are intended to consider an inherent variation in measured or calculated values to be recognized by those skilled in the art.

Although the terms "first," "second," "third," and the like may be used in the present specification to describe various elements, components, regions, layers and/or sections, these elements, components, regions, layers and/or sections should not be limited by these terms. These terms are used only to distinguish one element, component, region, drawing layer, or section from another element, component, region, drawing layer, or section. Accordingly, a first element, component, region, layer, or section to be described herein may be referred to a second element, component, region, layer, or section without departing from the teachings of the present disclosure.

Spatially related terms such as "beneath," "below," "lower," "above," and "upper" are used for easy description of the relationship of one element or feature to another element or feature shown in the drawings. These spatially related terms are provided for easy understanding of the present disclosure according to various process states or usage states of the present disclosure, and are not intended to limit the present disclosure. For example, when the elements or features in the drawings are reversed, an element described as "lower" or "below" "becomes "upper" or "above." Accordingly, "below" is a concept encompassing "above" or "below."

The terms used in the present specification is intended to describe the embodiments of the present disclosure, and is not intended to limit the present disclosure.

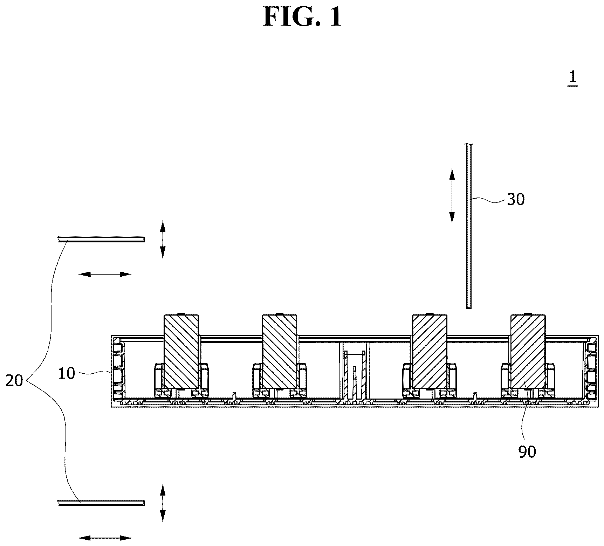

FIG. 1 is a view schematically showing a battery charger according to embodiments of the present disclosure. Referring to FIG. 1, a battery charger 1 according to embodiments of the present disclosure includes a tray 10, a probe 20, and a hopper nozzle 30.

A plurality of battery cells 90 may be vertically disposed on the tray 10. Each of the battery cells 90 includes an electrode assembly in which a positive electrode, a negative electrode, and a separator are repeatedly stacked, and a can into which the electrode assembly is inserted may have an angled shape. When the battery cell 90 is disposed on the tray 10, a positive electrode terminal and a negative electrode terminal may be exposed at an upper side of the battery cell 90, or the positive electrode terminal and the negative electrode terminal may be exposed at the upper side and a lower side of the battery cell 90, respectively. Since the battery cells 90 are vertically disposed, it is possible to arrange four or more rows of battery cells 90 inside the limited tray 10. That is, in the past, the battery cells 90 were horizontally arranged to arrange the battery cells 90 in one row and 24 cells in the limited tray 10, but in the present disclosure, the battery cells 90 may be arranged in four rows and 24 battery cells 90 may be arranged in each row. The vertical arrangement of the battery cells 90 may refer to a state in which a narrow side of the rectangular parallelepiped-shaped battery cells 90 is disposed on the bottom of the tray and the battery cells 90 are upright.

The probe 20 may be connected to each battery cell 90 and may charge the battery cell 90. The probe 20 may be connected to each of the positive electrode terminal and the negative electrode terminal of the battery cell 90. The probe 20 may be moved vertically and horizontally to be connected to or separated from the positive electrode terminal and the negative electrode terminal of the battery cell 90.

When the positive electrode terminal and the negative electrode terminal of the battery cell 90 are disposed on the upper side of the battery cell 90, a pair of probes 20 may be moved from the upper side of the tray 10 to be connected to the positive electrode terminal and the negative electrode terminal.

When the positive electrode terminal and the negative electrode terminal of the battery cell 90 are disposed on the upper and lower sides of the battery cell 90, respectively, one of the pair of probes 20 may be moved above the tray 10 and the other may be moved below the tray 10 to be connected to the positive electrode terminal and the negative electrode terminal. In order for the probe 20 moving below the tray 10 to be connected to the terminal, a lower portion of the tray 10 may be opened to expose the terminal.

The hopper nozzle 30 may remove internal gas generated in each battery cell 90. The hopper nozzle 30 may be connected to each battery cell 90 and may recover an internal electrolyte and gas of the battery cell 90. The hopper nozzle 30 may inject the electrolyte into each battery cell 90. The hopper nozzle 30 may be connected to the battery cell 90 while the charging/discharging process of the battery cell 90 continues. The hopper nozzle 30 may be connected to each battery cell 90 by adjusting its own position.

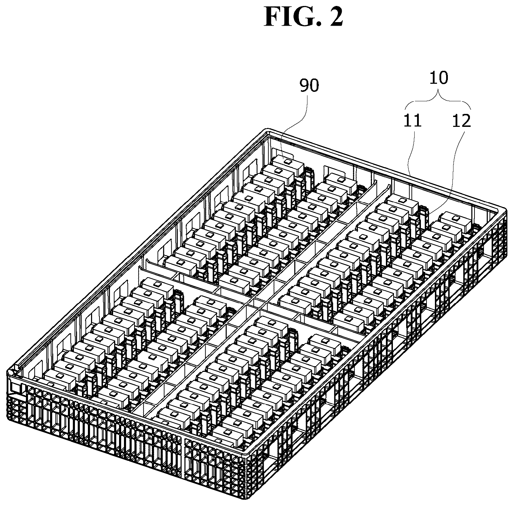

FIG. 2 is a view schematically showing a tray according to embodiments of the present disclosure. Referring to FIG. 2, the tray 10 according to embodiments of the present disclosure may include a frame 11 and a socket 12.

The frame 11 may provide a space for arranging the battery cells 90. The frame 11 may be made of a metal material having excellent thermal conductivity, thereby quickly heating and cooling the battery cell 90. In addition, the frame 11 may be made of a non-metallic material having excellent moldability such as resin.

The socket 12 may be detachable from the frame 11 and may induce the battery cell 90 to be vertically disposed. A pair of sockets 12 are disposed to face one another and a row of battery cells 90 may be accommodated between the pair of sockets 12. The battery cell 90 may be inserted into both end portions of the socket 12 to maintain a fixed state. The plurality of battery cells 90 may be disposed in a longitudinal direction of the socket 12.

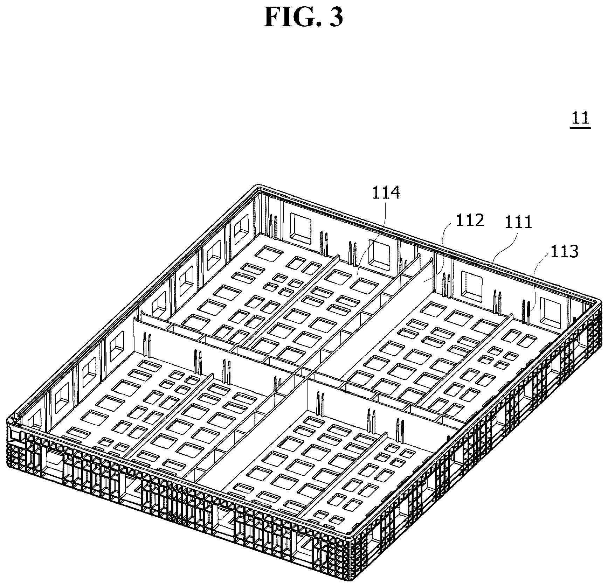

FIG. 3 is a view schematically showing a frame according to embodiments of the present disclosure. Referring to FIG. 3, the frame 11 according to embodiments of the present disclosure may include an outer frame 111, an inner frame 112, and a guide 113.

The outer frame 111 may have a rectangular frame shape. The outer frame 111 may have a square or rectangular shape depending on a work environment. The outer frame 111 may be integrally manufactured or assembled depending on a material.

The inner frame 112 may partition the inside of the outer frame 111. The inner frame 112 may be formed integrally with the outer frame 111 or may be coupled to the inside of the outer frame 111. When the inner frame 112 has a + shape in which two inner frames intersect, four workspaces may be formed inside the outer frame 111. The four workspaces have the same size, and the four workspaces may have different sizes depending on the work environment.

The guide 113 may guide the socket 12. The guide 113 is formed on the frame 11 and both end portions of the socket 12 may be fixed to the frame 11 by the guide 113.

The frame 11 according to embodiments of the present disclosure may further include a support frame 114. The support frame 114 may be connected to the outer frame 111 and may support the battery cell 90. The support frame 114 may be integrally formed with the outer frame 111 or may be coupled to the outer frame 111. The outer frame 111 may be coupled to an upper surface of an edge of the support frame 114. A hole may be formed in the support frame 114 to expose the terminal of the battery cell 90.

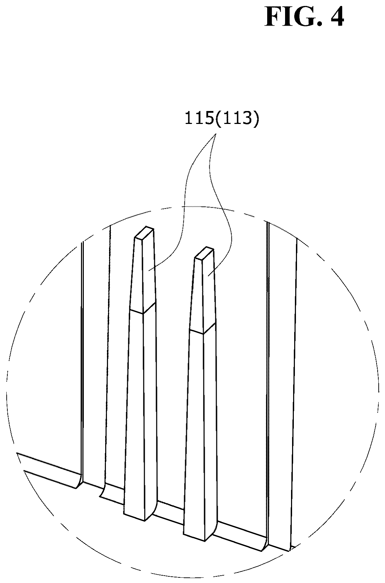

FIG. 4 is a view schematically showing embodiments of a guide formed in the frame of FIG. 3. Referring to FIG. 4, the guide 113 according to embodiments of the present disclosure may protrude from the outer frame 111 and the inner frame 112 to guide the socket 12. That is, a pair of guide protrusions 115 are formed on the outer frame 111 and the inner frame 112, and an end portion of the socket 12 is inserted between the guide protrusions 115 to maintain a fixed state.

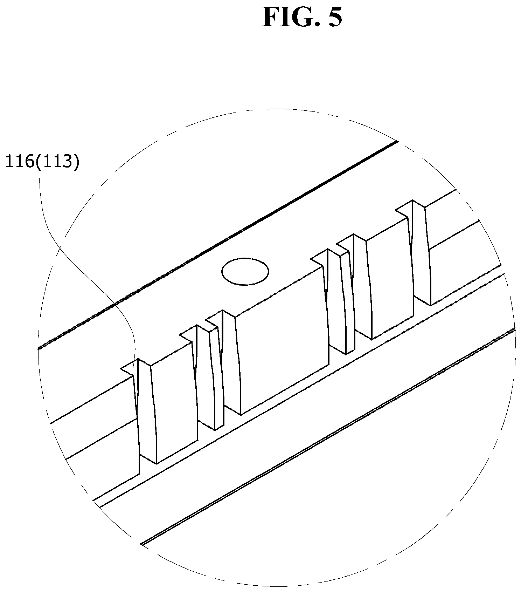

FIG. 5 is a view schematically showing embodiments of the guide formed in the frame of FIG. 3. Referring to FIG. 5, the guide 113 according to embodiments of the present disclosure may be recessed in the outer frame 111 and the inner frame 112 to guide the socket 12. That is, a guide groove 116 is formed in the outer frame 111 and the inner frame 112 and the end of the socket 12 is inserted between the guide protrusions 115 to maintain a fixed state.

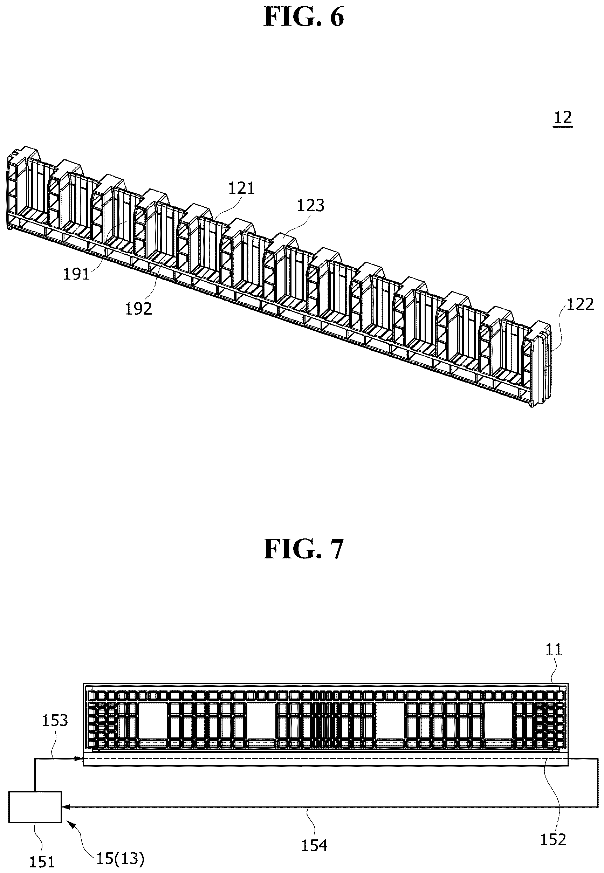

FIG. 6 is a view schematically showing a socket according to embodiments of the present disclosure. Referring to FIG. 6, the socket 12 according to embodiments of the present disclosure may include a socket plate 121, a socket connector 122, and a socket receiving part 123.

The socket plate 121 may be disposed inside the frame 11. The socket plate 121 may be inserted into a space between the outer frame 111 and the inner frame 112 of the frame 11. A pair of socket plates 121 may be disposed to face one another.

The socket plates 121 may include a first plate 191 disposed to face an end portion of the battery cell 90, and a second plate 192 formed at a lower portion of the first plate 191 to support the battery cell 90.

The socket connector 122 is formed at an end portion of the socket plate 121 and is movable along the guide 113. The socket connectors 122 may protrude at both end portions of the socket plate 121. The socket connector 122 may be formed to be inserted between the pair of guide protrusions 115 or may be formed to be inserted into the guide groove 116.

A plurality of socket receiving parts 123 are formed in the longitudinal direction of the socket plate 121 and the battery cells 90 may be partitioned and accommodated therein. The plurality of socket receiving parts 123 may protrude so as to face one another to support each battery cell 90. Both end portions of the battery cell 90 may be inserted between a pair of facing socket receiving parts 123. The socket receiving part 123 may be formed on one side surface of the first plate 191. In addition, the socket receiving part 123 may be formed on each of both side surfaces of the first plate 191.

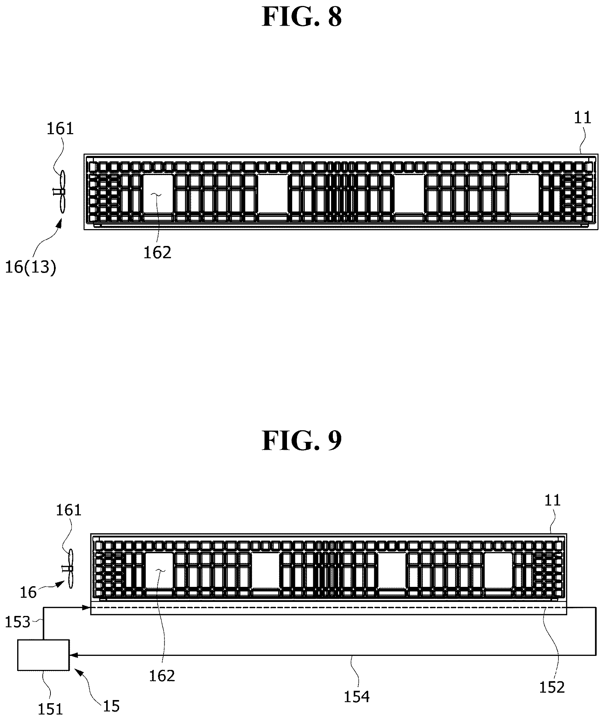

FIG. 7 is a view schematically showing embodiments of a cooling part cooling the frame according to embodiments of the present disclosure, FIG. 8 is a view schematically showing embodiments of the cooling part cooling the frame according to embodiments of the present disclosure, and FIG. 9 is a view schematically showing embodiments of the cooling part cooling the frame according to embodiments of the present disclosure. Referring to FIGS. 7 to 9, the tray 10 according to embodiments of the present disclosure may further include a cooling part 13. The cooling part 13 may be formed in at least one of the frame 11 and the socket 12, and may cool the battery cell 90.

The cooling part 13 according to embodiments of the present disclosure may include a water cooling part 15 for cooling the battery cell 90 using cooling water.

The water cooling part 15 may include a water cooling tank 151, a water cooling line 152, a water cooling supply part 153, and a water cooling recovery part 154. The cooling water may be stored in the water cooling tank 151. The water cooling line 152 may be buried in the frame 11 to guide the cooling water. The water cooling line 152 may be formed inside the outer frame 111 and the inner frame 112. In addition, the water cooling line 152 may be formed inside the support frame 114. The water cooling lines 152 formed in the outer frame 111, the inner frame 112, and the support frame 114 may be connected into one or may be separated to individually guide the cooling water. The water cooling supply part 153 may supply the cooling water by connecting the water cooling tank 151 and an inlet of the water cooling line 152. The water cooling recovery part 154 may recover the heat-exchanged cooling water by connecting the water cooling tank 151 and an outlet of the water cooling line 152. The cooling water passing through the water cooling recovery part 154 may be cooled by a heat exchanger.

The cooling part 13 according to embodiments of the present disclosure may be formed in the frame 11 and may include an air cooling part 16 for cooling the battery cell 90 using cooling air.

The air cooling part 16 may include a cooling fan 161 and a cooling hole 162. When power is applied, the cooling fan 161 may discharge cooling air to the frame 11 while the fan rotates. The cooling hole 162 may be formed in at least one of the frame 11 and the socket 12. The cooling hole 162 may be formed in the outer frame 111 and the inner frame 112 to pass cooling air therethrough. The cooling hole 162 may be formed in the support frame 114 to pass cooling air therethrough. The cooling hole 162 may be formed in the socket 12 to pass cooling air therethrough.

The cooling part 13 according to embodiments of the present disclosure may include a water cooling part 15 and an air cooling part 16.

The water cooling part 15 may include a water cooling tank 151, a water cooling line 152, a water cooling supply part 153, and a water cooling recovery part 154. The cooling water may be stored in the water cooling tank 151. The water cooling line 152 may be buried in the frame 11 to guide the cooling water. The water cooling line 152 may be formed inside the outer frame 111 and the inner frame 112. In addition, the water cooling line 152 may be formed inside the support frame 114. The water cooling lines 152 formed in the outer frame 111, the inner frame 112, and the support frame 114 may be connected into one or may be separated to individually guide the cooling water. The water cooling supply part 153 may supply the cooling water by connecting the water cooling tank 151 and an inlet of the water cooling line 152. The water cooling recovery part 154 may recover the heat-exchanged cooling water by connecting the water cooling tank 151 and an outlet of the water cooling line 152. The cooling water passing through the water cooling recovery part 154 may be cooled by a heat exchanger.

The air cooling part 16 may include a cooling fan 161 and a cooling hole 162. When power is applied, the cooling fan 161 may discharge cooling air to the frame 11 while the fan rotates. The cooling hole 162 may be formed in at least one of the frame 11 and the socket 12. The cooling hole 162 may be formed in the outer frame 111 and the inner frame 112 to pass cooling air therethrough. The cooling hole 162 may be formed in the support frame 114 to pass cooling air therethrough. The cooling hole 162 may be formed in the socket 12 to pass cooling air therethrough.

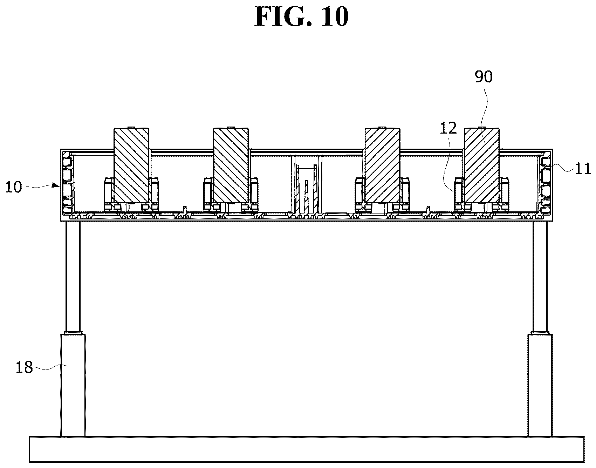

FIG. 10 is a view schematically showing a frame lifting part according to embodiments of the present disclosure. Referring to FIG. 10, the tray 10 according to embodiments of the present disclosure may further include a frame lifting part 18. The frame lifting part 18 may move the frame 11 up and down. The frame lifting part 18 may be fixedly installed on a fixed object such as the ground. One or more frame lifting parts 18 may be connected to the outer frame 111 or the support frame 114. The frame lifting part 18 may have a variable length or may move up and down to move the frame 11 up and down. The frame lifting part 18 may move the battery cell 90 stored in the tray 10 to a charging position or a standby position.

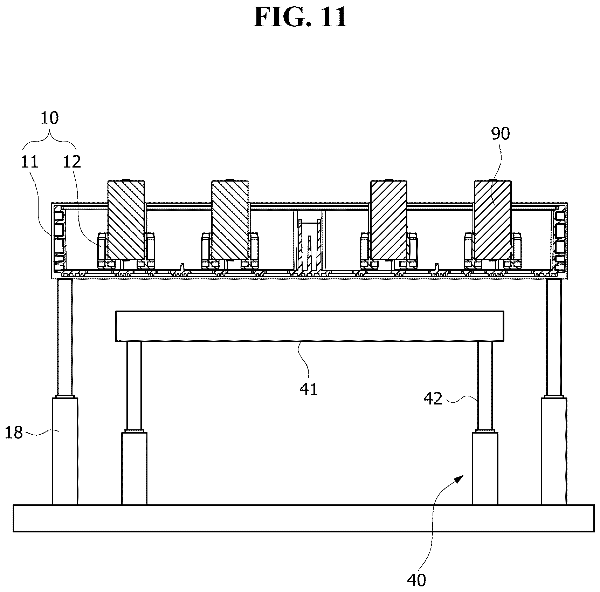

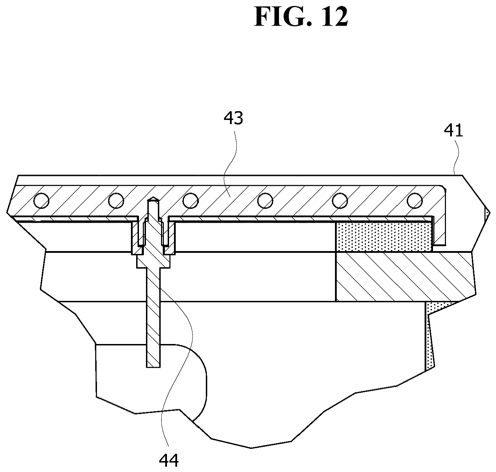

FIG. 11 is a view schematically showing an arrangement state of a heating part according to embodiments of the present disclosure, and FIG. 12 is a view schematically showing the heating part according to embodiments of the present disclosure. Referring to FIGS. 11 and 12, the battery charger 1 according to embodiments of the present disclosure may further include a heating part 40.

The heating part 40 may heat the battery cell 90. The heating part 40 may heat the battery cell 90 filled with the electrolyte to a set temperature. The heating part 40 may include a heating frame 41, a heating frame lifting part 42, a heating plate 43, and a heating sensor 44.

The heating frame 41 may be molded by including a thermally conductive material. The heating frame 41 may be designed to correspond to the support frame 114 or to have a size smaller than that of the support frame 114. When there is no support frame 114, the heating frame 41 may be designed to correspond to the outer frame 111 or to have a size smaller than that of the outer frame 111. The frame lifting part 18 may be connected to the outside of the outer frame 111 so as not to interfere with the heating frame 41.

The heating frame lifting part 42 may raise and lower the heating frame 41. The heating frame lifting part 42 is mounted on a fixed object such as the ground and may have a variable length or may move up and down to adjust a height of the heating frame 41. When the heating frame lifting part 42 raises, the heating frame 41 comes into close contact with the frame 11 to heat the battery cell 90 accommodated in the socket 12.

The heating plate 43 may be provided in the heating frame 41 and heated when power is applied. The heating plate 43 may be mounted on an upper side of the heating frame 41 or may be embedded in the heating frame 41. When power is applied to the heating plate 43, the temperature of the heating plate 43 may increase.

The heating sensor 44 may be mounted on the heating plate 43 and may measure the temperature. The heating sensor 44 may measure the temperature of the heating plate 43 in real time and adjust the temperature of the heating plate 43 according to the measurement signal of the heating sensor 44.

Meanwhile, the herein description is described assuming that the heating part 40 is installed below the frame 11. The heating part 40 may be additionally installed above the frame 11. The heating part 40 installed above the frame 11 has the same components as the heating part 40 installed below the frame 11. However, the fixed object may vary due to the difference in position. In addition, the heating part 40 may be installed on the side surface of the frame 11. The heating part 40 installed on the side surface of the frame 11 has the same components as the heating part 40 installed below the frame 11. However, the fixed object may vary due to the difference in position.

The operation of the battery charger according to embodiments of the present disclosure having the herein-described configuration will be described as follows.

The socket 12 is installed in the frame 11, and the battery cell 90 is vertically accommodated in each of the plurality of socket receiving parts 123 formed in the socket 12.

When the battery cell 90 is accommodated in the socket 12, the heating frame 41 is brought close to the frame 11 by the heating frame lifting part 42, and power is applied to the heating plate 43 to heat the battery cell 90. When gas is generated in the battery cell 90 during the heating process, the hopper nozzle 30 may recover the electrolyte and the gas and replenish the electrolyte.

When the heating process of the battery cell 90 is completed, the heating frame 41 is moved away from the frame 11 by the heating frame lifting part 42. When the heating frame 41 moves away from the frame 11, the probe 20 is connected to the battery cell 90 to perform charging and discharging.

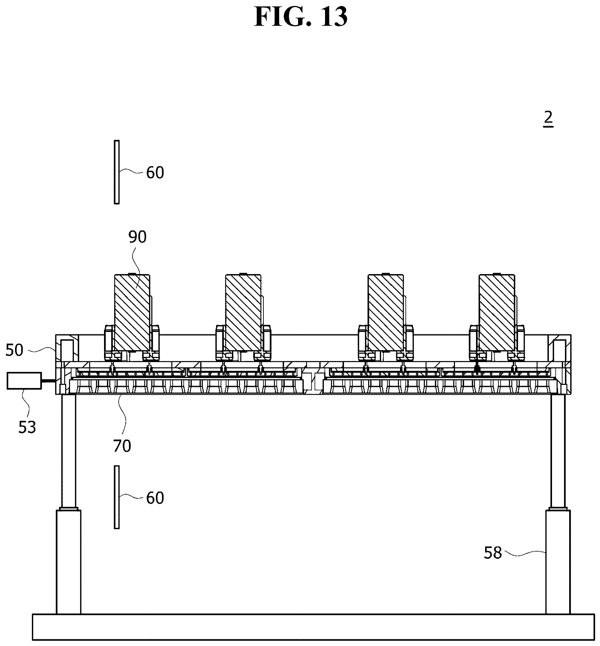

FIG. 13 is a view schematically showing a battery charger according to embodiments of the present disclosure. Referring to FIG. 13, a battery charger 2 according to embodiments of the present disclosure includes a tray 50, a probe 60, and a heating part 70.

The battery cell 90 may be vertically disposed on the tray 50. The battery cell 90 includes an electrode assembly in which a positive electrode, a negative electrode, and a separator are repeatedly stacked, and a can into which the electrode assembly is inserted may have an angled shape. When the battery cell 90 is disposed on the tray 50, a positive electrode terminal and a negative electrode terminal may be exposed at the upper side of the battery cell 90, or the positive electrode terminal and the negative electrode terminal may be exposed at the upper side and the lower side of the battery cell 90, respectively. The battery cell 90 is disposed vertically. The number of battery cells 90 vertically disposed in the limited tray 50 is greater than the number of battery cells 90 horizontally disposed. For example, in the related art, the battery cells 90 were horizontally disposed to arrange 24 cells in one row inside the tray 50, but in the present disclosure, even when the tray 50 having the same size as the related art is used, the battery cells 90 may be vertically disposed to arrange 24 cells in four rows.

The probe 60 may be connected to the battery cell 90 and may charge the battery cell 90. The probe 60 may be connected to each of the positive electrode terminal and the negative electrode terminal of the battery cell 90. The probe 60 may be moved vertically and horizontally to be connected to or separated from the positive electrode terminal and the negative electrode terminal of the battery cell 90.

When the positive electrode terminal and the negative electrode terminal of the battery cell 90 are disposed on the upper side of the battery cell 90, a pair of probes 60 may be moved from the upper side of the tray 50 to be connected to the positive electrode terminal and the negative electrode terminal.

When the positive electrode terminal and the negative electrode terminal of the battery cell 90 are disposed on the upper and lower sides of the battery cell 90, respectively, one of the pair of probes 60 may be moved above the tray 50 and the other may be moved below the tray 50 to be connected to the positive electrode terminal and the negative electrode terminal.

The heating part 70 may be mounted on the tray 50 and may heat the battery cell 90. The heating part 70 may be mounted on a lower portion of the tray 50 and may heat the battery cell 90 directly or the battery cell 90 through the tray 50. The heating part 70 may heat the battery cell 90 filled with the electrolyte to a set temperature.

In addition, the battery charger 2 according to embodiments of the present disclosure may further include the hopper nozzle 30 of FIG. 1. The hopper nozzle 30 may remove internal gas of the battery cell 90. The hopper nozzle 30 may be connected to each battery cell 90 and may recover the internal electrolyte and gas of the battery cell 90. The hopper nozzle 30 may inject the electrolyte into each battery cell 90. The hopper nozzle 30 may be connected to the battery cell 90 while the charging/discharging process of the battery cell 90 continues. The hopper nozzle 30 may be connected to each battery cell 90 by adjusting its own position.

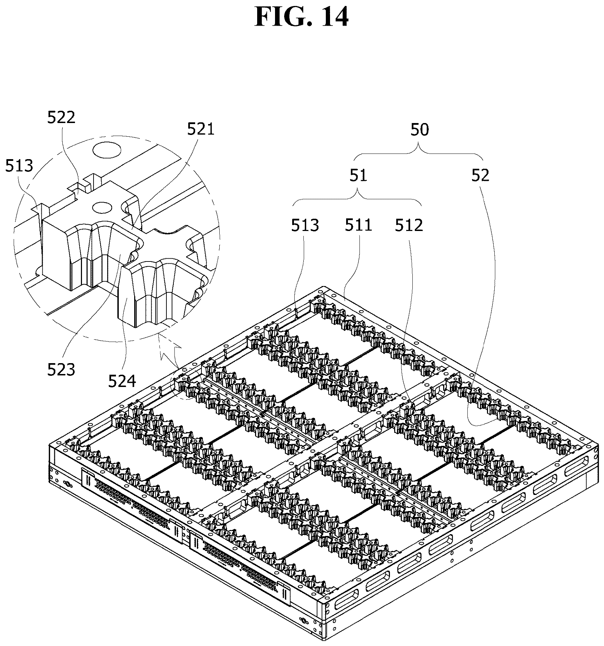

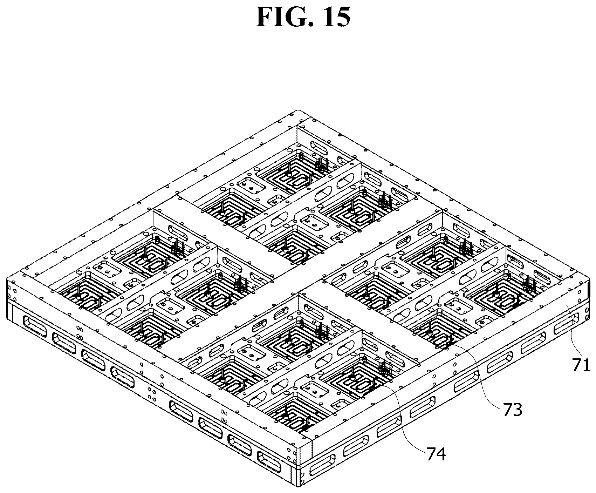

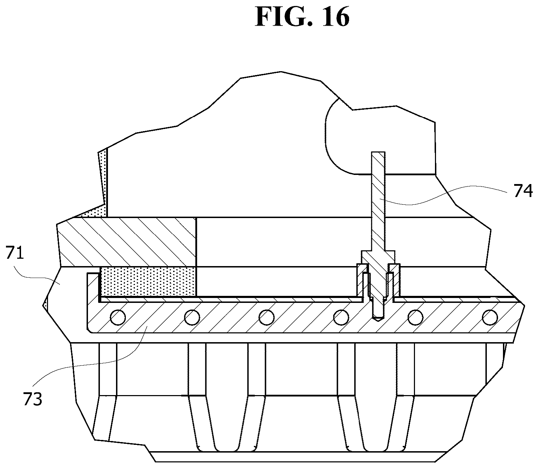

FIG. 13 is a view schematically showing a battery charger according to embodiments of the present disclosure. FIG. 14 is a plan perspective view schematically showing a tray according to embodiments of the present disclosure. FIG. 15 is a bottom perspective view schematically showing the tray according to embodiments of the present disclosure. FIG. 16 is a view schematically showing a heating part according to embodiments of the present disclosure. Referring to FIGS. 13 to 16, the tray 50 according to embodiments of the present disclosure may include a frame 51 and a socket 52.

The frame 51 may provide a space for arranging the battery cells 90. The frame 51 may be made of a metal material having excellent thermal conductivity, thereby quickly heating and cooling the battery cell 90. In addition, the frame 51 may be made of a non-metallic material having excellent moldability such as resin.

The socket 52 may be detachable from the frame 51 and may induce the battery cell 90 to be vertically disposed. A pair of sockets 52 may be disposed to face one another and the battery cell 90 may be accommodated between the sockets 52. Both end portions of the battery cell 90 may be inserted into the sockets 52 to maintain a fixed state. The plurality of battery cells 90 may be disposed in the longitudinal direction of the socket 52.

The frame 51 may include an outer frame 511, an inner frame 512, and a guide 513.

The outer frame 511 may have a rectangular frame shape. The outer frame 511 may have a square or rectangular shape depending on a work environment. The outer frame 511 may be integrally manufactured or assembled depending on a material.

The inner frame 512 may partition the inside of the outer frame 511. The inner frame 512 may be formed integrally with the outer frame 511 or may be coupled to the inside of the outer frame 511. Two or four workspaces may be formed inside the outer frame 511 depending on a shape of the inner frame 512. Such workspaces may have the same size, but the size of the workspace may vary depending on the work environment.

The guide 513 may guide the socket 52. The guide 513 may be formed on the frame 51 and both end portions of the socket 52 may be fixed to the frame 51 by the guide 513. Since a specific shape of the guide 513 corresponds to the description of the guide 113 according to embodiments of the present disclosure and FIGS. 4 and 5, a detailed description thereof will be omitted.

The frame 51 according to embodiments of the present disclosure may further include a frame lifting part 58. The frame lifting part 58 may move the frame 51 up and down. The frame lifting part 58 may be fixedly installed on a fixed object such as the ground. One or more frame lifting parts 58 may be connected to the outer frame 511 or the heating part 70. The frame lifting part 58 may have a variable length or may be moved up and down to move the frame 51 up and down.

The socket 52 according to embodiments of the present disclosure may include a socket plate 521, a socket connector 522, and a socket receiving part 523.

The socket plate 521 may be disposed inside the frame 51. The socket plate 521 may be inserted into a space between the outer frame 511 and the inner frame 512 of the frame 51. A pair of socket plates 521 may be disposed to face one another.

The socket connector 522 is formed at an end portion of the socket plate 521 and is movable along the guide 513. The socket connectors 522 may protrude at both end portions of the socket plate 521.

A plurality of socket receiving parts 523 may be formed in the longitudinal direction of the socket plate 521 and the battery cells 90 may be partitioned and accommodated therein. The socket receiving part 523 may have a shape recessed in the socket plate 521 such that an end portion of the battery cell 90 may be mounted thereon.

A plurality of socket protrusions 524 may protrude in the longitudinal direction of the socket plate 521 to prevent contact between the battery cells 90. The socket protrusion 524 may be disposed between the battery cells 90 accommodated in the socket receiving part 523.

The socket receiving parts 523 and the socket protrusions 524 may be formed only on one side surface of the socket plate 521 or may be formed on both side surfaces of the socket plate 521.

The tray 50 according to embodiments of the present disclosure may further include a cooling part 53. The cooling part 53 may be formed in at least one of the frame 51 and the socket 52, and may cool the battery cell 90. Since a specific configuration of the cooling part 53 corresponds to the description of the cooling part 13 according to embodiments of the present disclosure and FIGS. 7 and 9, a detailed description thereof will be omitted.

The heating part 70 according to embodiments of the present disclosure may heat the battery cell 90. The heating part 70 may heat the battery cell 90 filled with the electrolyte to a set temperature. The heating part 70 may include a heating frame 71, a heating plate 73, and a heating sensor 74. The heating part 70 may be partially open so that the terminal of the battery cell 90 may be exposed to the outside.

The heating frame 71 may be mounted on the frame 51 and may be molded by including a thermally conductive material. The heating frame 71 may be designed to correspond to the outer frame 511 or to have a size smaller than that of the outer frame 511.

The heating plate 73 may be provided on the heating frame 71 and may be heated when power is applied. The heating plate 73 may be mounted on an upper side of the heating frame 71 or may be embedded in the heating frame 41. When power is applied to the heating plate 73, the temperature of the heating plate 73 may increase.

The heating sensor 74 may be mounted on the heating plate 73 and may measure the temperature. The heating sensor 74 may measure the temperature of the heating plate 73 in real time and adjust the temperature of the heating plate 73 according to the measurement signal of the heating sensor 74. In addition, the heating sensor 74 may protrude upward to come into contact with the battery cell 90 or may be placed close to battery cell 90 to measure the actual temperature of battery cell 90.

The operation of the battery charger according to embodiments of the present disclosure having the herein-described configuration will be described as follows.

The socket 52 is installed in the frame 51, and the battery cell 90 is vertically accommodated in each of the plurality of socket receiving parts 523 formed in the socket 52.

When the battery cell 90 is accommodated in the socket 52, power is applied to the heating plate 73 mounted at a lower portion of the frame 51 to heat the battery cell 90. When gas is generated in the battery cell 90 during the heating process, the hopper nozzle 30 may recover the electrolyte and the gas and replenish the electrolyte.

When the heating process for the battery cell 90 is completed, the probe 20 is moved to be connected to the battery cell 90 to perform charging and discharging.

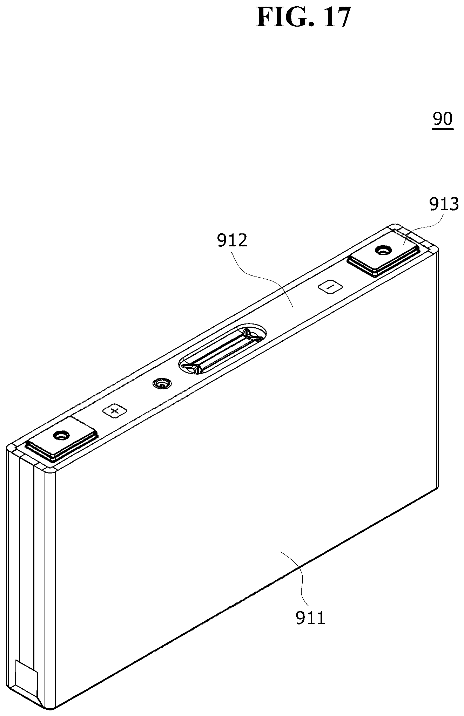

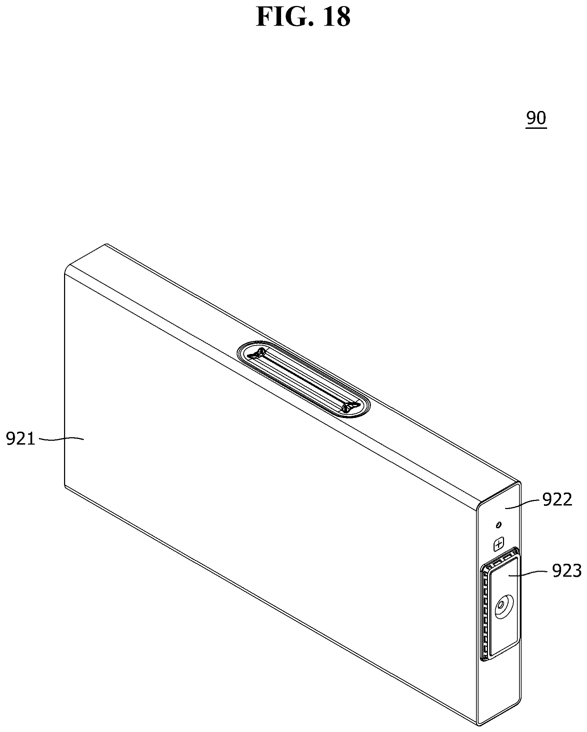

FIG. 17 is a view schematically showing a battery cell according to embodiments of the present disclosure and FIG. 18 is a view schematically showing a battery cell according to embodiments of the present disclosure.

Referring to FIG. 17, a battery cell 90 according to embodiments of the present disclosure may include a first case 911, a first cap cover 912, and a first terminal 913.

The first case 911 may have at least one electrode assembly wound with a separator, which is an insulator, interposed between a positive electrode and a negative electrode, and an upper side thereof is open.

The first case 911 may form an overall exterior of the battery cell 90, and may be formed of a conductive metal such as aluminum, an aluminum alloy, or nickel-plated steel. Further, the first case 911 may provide a space where the electrode assembly is accommodated.

The first cap cover 912 may cover an open area of the first case 911. The first cap cover 912 and the first case 911 may be formed of a conductive material.

The first terminal 913 may be assembled to the first cap cover 912 and connected to the electrode assembly. The first terminal 913 electrically connected to the positive electrode or the negative electrode may be installed to pass through the first cap cover 912 and protrude outward. Furthermore, the first terminal 913 protruding to the outside of the first cap cover 912 may be formed as a pair. The pair of first terminals 913 are connected to the positive electrode and the negative electrode, respectively, and may function as a positive electrode terminal and a negative electrode terminal of the battery cell 90. Depending on the design, the first terminal 913 may be disposed on an upper side of the battery cell 90 or on a lower side of the battery cell 90.

Referring to FIG. 18, a battery cell 90 according to embodiments of the present disclosure may include a second case 921, a second cap cover 922, and a second terminal 923.

The second case 921 may have at least one electrode assembly wound with a separator, which is an insulator, interposed between a positive electrode and a negative electrode, and left and right sides thereof are open.

The second case 921 may form an overall exterior of the battery cell 90, and may be formed of a conductive metal such as aluminum, an aluminum alloy, or nickel-plated steel. Further, the second case 921 may provide a space where the electrode assembly is accommodated.

The second cap cover 922 may cover an open area of the second case 921. The second cap cover 922 may be disposed on each of both left and right sides of the second case 921. The second cap cover 922 and the second case 921 may be formed of a conductive material.

The second terminal 923 may be assembled to the second cap cover 922 and connected to the electrode assembly. The second terminal 923 electrically connected to the positive electrode or the negative electrode may be installed to pass through the second cap cover 922 and protrude outward. A pair of second terminals 923 disposed on both left and right sides are connected to the positive electrode and the negative electrode, respectively, and may function as a positive electrode terminal and a negative electrode terminal of the battery cell 90.

The battery cells 90 according to embodiments shown in FIG. 17 may be horizontally disposed in the tray 10 of FIG. 1 and the tray 50 of FIG. 13, and the battery cell 90 according to embodiments shown in FIG. 18 may be vertically disposed. Additionally, the battery cells 90 according to embodiments shown in FIG. 18 may be vertically disposed on the tray 10 in FIG. 1 and the tray 50 in FIG. 13.

In the battery charger 1 according to embodiments of the present disclosure, the battery cells 90 are vertically disposed in the tray 10, and thus the number of battery cells 90 for charging the battery cells 90 in a limited space may be increased.

In the battery charger according to embodiments of the present disclosure, the heating part 40 may be disposed close to the tray 10 or the heating part 70 may be mounted on the tray 50 to heat the battery cell 90 to a set temperature.

The battery charger according to embodiments of the present disclosure may cool the battery cell 90 heated during the charging process by the cooling part 13.

However, technical effects acquirable through the present disclosure are not limited to the herein-described technical effects, and other technical effects which are not mentioned will be clearly understood by those skilled in the art from the description of the disclosure described herein.

Although the present disclosure has been described with reference to the embodiments shown in the drawings, these are merely examples, and it should be understood by those skill in the art that various modifications and equivalents are possible.

Accordingly, the technical scope of the present disclosure should be defined by the following claims.

## Claims

1. A battery charger comprising:
a tray configured to support each of a plurality of battery cells so that the plurality of battery cells are vertically spaced apart from one another;
a probe connected to each of the battery cells and configured to charge the plurality of battery cells; and
a hopper nozzle configured to remove internal gas from the plurality of battery cells.

2. The battery charger of claim 1, wherein the tray includes:
a frame; and
a socket detachable from the frame and inducing the battery cell to be disposed vertically; and, optionally, the tray may further include a frame lifting part that moves the frame up and down.

3. The battery charger of claim 2, wherein the frame includes:
an outer frame having a rectangular frame shape;
an inner frame that divides an inside of the outer frame; and
a guide that guides the socket.

4. The battery charger of claim 3, wherein the frame further includes a support frame connected to the outer frame and supporting the battery cell.

5. The battery charger of claim 3 or claim 4, wherein (A) the guide protrudes from the outer frame and the inner frame to guide the socket; or (B) the guide is recessed in the outer frame and the inner frame to guide the socket.

6. The battery charger of any of claims 3 to 5, wherein the socket includes:
a socket plate disposed inside the frame;
a socket connector formed at an end portion of the socket plate, and movable along the guide; and
a plurality of socket receiving parts formed in a longitudinal direction of the socket plate and configured to partition and accommodate the battery cells.

7. The battery charger of any of claims 2 to 6, wherein the tray further includes a cooling part formed in at least one of the frame and the socket and cooling the battery cell; optionally:
(A) the cooling part may include a water cooling part formed on the frame and cooling the battery cell using cooling water; or
(B) the cooling part may include an air cooling part formed on the frame and cooling the battery cell using cooling air; or
(C) the cooling part may include: a water cooling part formed on the frame and cooling the battery cell using cooling water; and an air cooling part formed on the frame and cooling the battery cell using cooling air.

8. The battery charger of any preceding claim, further comprising a heating part configured to heat the battery cell.

9. The battery charger of claim 8, wherein the heating part includes:
a heating frame;
a heating frame lifting part that raises and lowers the heating frame;
a heating plate provided in the heating frame and heated when power is applied; and
a heating sensor mounted on the heating plate and measuring a temperature.

10. A battery charger comprising:
a tray in which battery cells are disposed vertically;
a probe connected to at least one of the battery cells and configured to charge the at least one of the battery cells; and
a heating part mounted on the tray and configured to heat the at least one of the battery cells.

11. The battery charger of claim 10, wherein the tray includes:
a frame; and
a socket detachable from the frame and inducing the at least one of the battery cells to be disposed vertically.

12. The battery charger of claim 11, wherein the frame includes:
an outer frame having a rectangular frame shape;
an inner frame that divides an inside of the outer frame; and
a guide that guides the socket; and, optionally,
wherein the frame further includes a frame lifting part that is connected to the outer frame and adjusts a height of the outer frame.

13. The battery charger of any of claims 11 to 12, wherein the tray further includes a cooling part formed in the frame and the socket and cooling the at least one of the battery cells.

14. The battery charger of any of claims 11 to 13, wherein the heating part includes:
a heating frame mounted on the frame;
a heating plate provided in the heating frame and heated when power is applied; and
a heating sensor mounted on the heating plate and measuring a temperature.

15. A method of manufacturing a battery charger including: providing a tray configured to support each of a plurality of battery cells so that the plurality of battery cells are vertically spaced apart from one another, providing a probe connected to each of the battery cells and configured to charge the plurality of battery cells, and providing a hopper nozzle configured to remove internal gas from the plurality of battery cells.
